# EUROPEAN PATENT SPECIFICATION

(11) **EP 4 593 985 B1**
(45) Date of publication and mention of the grant of the patent: **29.07.2026**
(21) Application number: 23777213.2
(22) Date of filing: 25.09.2023
(51) Int. Cl.: B01D 45/08, B01D 45/10, B01D 53/78

(54) **DROPLET SEPARATOR**
TRÖPFCHENABSCHEIDER
SÉPARATEUR DE GOUTTELETTES

(30) Priority: 30.09.2022 DE 102022125418
(43) Date of publication of application: 06.08.2025
(73) Proprietor: Munters Euroform GmbH, 52068 Aachen (DE)
(72) Inventor: WANDRES, Peter, 52066 Aachen (DE); MATERN, Roman, 52134 Herzogenrath (DE); SCHIEREN, Wilhelm, 52072 Aachen (DE); SCHMITZ, Jürgen, 52070 Aachen (DE)
(74) Representative: Stein, Jan
(86) International application number: PCT/EP2023/076390
(87) International publication number: WO 2024/068543

(56) References cited:
- EP-A1- 0 620 033
- CN-A- 110 124 500
- CN-A- 113 413 734
- US-A- 1 866 193

## Description

The present invention relates to a separation device in a gas stream channel, and a flue gas cleaning system having a separation device according to the invention.

Separation devices of the generic type, in particular such separation devices that have separator levels with rod or respectively tube-shaped separator elements arranged parallel to each other, are frequently used in flue gas cleaning systems, in particular in flue gas desulfurization systems. Before a treatment of the flue gases with the separation device, the flue gas is cleaned in a flue gas cleaning system, normally in a wet washing method, in particular to remove sulfur dioxide (SO2) from the flue gas. The cleaned gas is then conducted into the separation device in order to remove remaining particles and droplets from the gas stream following a wet washing in the gas stream. Typically, separation devices of the generic type are arranged in a vertical gas stream oriented from a bottom to the top so that the particles and droplets collecting on the separator elements can drop or respectively rain down following gravity against the gas flow. With an orientation of the separator levels that is suitably oblique or respectively inclined downward in a vertical direction, the liquid can flow along the separator elements of the separator levels, following gravity downward, and continue to rain downward in a strand. Below the separation device, the falling or downwardly flowing particles and droplets are normally collected in a so-called scrubber sump.

The particles in the separation process, in particular adhering to the separator elements, frequently cause contamination of the separation device. It is therefore normally provided to apply a rinsing liquid to the device, in particular the separator levels, at regular cleaning intervals. This discontinuous application of liquid is typically performed during ongoing operation, i.e., while the gas stream is flowing through the separation device. Provided that the flow speed of the treated gas between the separator elements is sufficiently low, the liquid thereby accumulating on the separator elements can rain or respectively flow down and is captured in the scrubber sump.

To separate very small particles, for example in the range of less than 15 µm, a liquid can be applied to at least some separator elements or respectively separator levels, including continuously. The application of the liquid is normally performed by nozzles to achieve a continuous wetting of the separator elements and thereby promote efficient cleaning or respectively particle separation.

Separation devices for removing particles and droplets from a gas flow are for example known from DE 102006004723 A1, WO 1996024429 A1 and WO 2007104284 A2.

In the separation of very small particle sizes, and in particular at high speeds between the separator elements at which the so-called flooding point of the separator stage is reached or respectively exceeded, it may occur that the liquid film running off the separator elements is prevented from running off by the gas flow, and larger droplets are detached from the liquid film by the gas flow and transported upward in the direction of the outlet of the separation device. This mode of operation can result in a failure of the overall separation device.

The object of the present invention is to provide a separation device of the initially describe type which can even be efficiently operated when a separator element, given a vertical gas flow, is at the flooding point or above.

The object is achieved by a separation device having the features of claim 1. Advantageous embodiments are specified in the dependent claims.

The invention is based on the concept of guiding raining liquid droplets against the direction of flow of the gas to be treated along inclined arranged separator elements, and collecting them in a collection basin arranged in the flow channel. From there, the liquid can be drained in a controlled matter in a scrubber or respectively in a scrubber sump.

A separation device is in accordance with the invention for separating droplets and particles from a gas stream having a directional component facing upward in a substantially vertical direction, wherein the separation device contains at least one separator stage that comprises at least one separator layer having a plurality of elongated separator elements arranged parallel to each other, and wherein the separator elements of the at least one separator stage are arranged inclined in their longitudinal orientation relative to the horizontal direction in a first region in at least one direction of inclination, and wherein the separation device has a rinsing apparatus by means of which a rinsing liquid can be applied to at least some of the inclined arranged separator elements, and wherein the bottom end regions in a vertical direction of the separator elements of at least one separator stage open into a collection basin arranged in the gas stream, and wherein the collection basin has a valve in a bottom region which controls an outlet opening and can be brought into an open position releasing the outlet opening and into a closed position at least partially closing the outlet opening.

The collection basin is preferably designed such that quantities of liquid can be discharged at different drainage speeds. A first quantity of liquid arising during a cleaning rinse of the rear side of the separator elements of a separator layer, i.e. the side facing away from the gas flow, is normally much larger than a quantity of liquid arising during a continuous spraying of the separator elements. The size of the outlet opening can therefore be designed for the greater quantity of liquid in order to prevent the collection basin from overflowing. However as a result, a liquid level would not form in the collection basin when there is the small amount of liquid, and gas flowing in a vertical direction from below against the collection basin can penetrate the collection basin through the outlet opening and bypass the separator stage of the separation device opening into the catch basin.

With regard to the terms "vertical" and "horizontal", it should be noted that a "vertical" direction indicates a direction upward or respectively downward along the orientation of acceleration under gravity, and "horizontal" indicates an orientation running perpendicular to this direction.

The separation device according to the invention is preferably arranged in a gas flow which flows upward substantially in a vertical direction. For the separation device to function, it is however enough if the gas flow to be treated has an upwardly directed directional component in the vertical direction so that, given an inclined arrangement of the separator elements according to the invention, a liquid can run off them following gravity in the direction of the collection basin according to the invention.

The rinsing apparatus is preferably designed such that both a continuous spraying of separator elements by a first liquid supply can be carried out as well as a cleaning rinse which can be performed at certain points in time during the operation of the separation device with a larger supply of liquid in comparison to continuous spraying.

According to the invention, an outlet opening controlled by means of a valve is arranged in the bottom region of the collection basin. Preferably, the valve according to the invention is designed such that the outlet opening is only partially closed by the valve in the closed position. This can allow a first quantity of liquid which collects in the collection basin, for example from continuously spraying a separator level arranged above the collection basin, to continuously flow off but accumulate in the process so that a liquid seal of the outlet opening is formed which prevents the penetration of the gas flowing from below against the collection basin.

The valve can also be designed such that it can be brought into an open position which releases the outlet opening when a larger quantity of liquid accumulates in the collection basin, for example in the case of a cleaning rinse of the separation device or respectively a separator level arranged above the collection basin. This can prevent an overflow of the collection basin even when there is an accumulation of larger quantities of water.

In particular for use in flue gas cleaning systems in which the separation device is normally exposed to a corrosive and contaminant-laden environment, or for treatment of other aggressive and/or dirt-laden gases, the valve according to the invention should be resistant to corrosive and/or contamination-intensive influences by liquids or gases coming into contact with the valve.

With regard to the design of the separation device, it can be provided according to one preferred variant that the device contains at least two separator stages at a distance from each other. The at least one separator stage according to the invention whose inclined arranged separator elements open into the collection basin according to the invention is preferably designed as an agglomerator stage whose separator elements are preferably designed in the shape of a rod or tube. The other separator stage, in particular arranged in a vertical direction above the separator stage according to the invention, can have separator elements which are arranged inclined in at least in one first region. The separator elements of this second separator stage can be arranged inclined in different directions, i.e. for example in a V-shape open upward or downward. It is also conceivable for all the separator elements of this second separator stage to be arranged inclined only in one direction, i.e. in an inclined oriented plane in comparison to the horizontal direction, and accordingly run obliquely downward or respectively upward from one side wall to the opposing side wall. Last but not least, it is conceivable that this additional separator stage has separator elements arranged horizontally or respectively flat, i.e. level. When there are two or multi-stage separators, a first separator stage in the direction of the gas flow is preferably an agglomerator which is operated at the flooding point or above, and the second separator stage arranged in a vertical direction above the first separator stage is preferably designed as a lamella droplet separator.

Preferably, the separation device according to the invention is designed as a module so that a system consisting of a plurality of separation devices can also be in accordance with the invention. The idea is that the separation devices are then arranged adjacent to one another in a flow channel transverse to the direction of flow of the gas flow such that a gas flow introduced into the flow channel is guided through the separation devices.

With regard to the separator stage according to the invention, the idea is that the separator elements are arranged inclined in a second region in another direction of inclination, in particular such that the separator elements of the at least one separator stage are arranged approximately in a V-shape. If the separator elements are inclined in different directions, the path that a droplet follows in its course along a separator element to an end region of the separator element can be reduced. This can prevent larger droplets from forming along the separator element, or respectively can reduce the probability that droplets in their course along the separator element will be captured by the gas flow and borne upward in the direction of the outlet of the separation device.

A V-shaped arrangement of the separator elements which opens upward has the advantage that a common collection basin for two separator elements which are each inclined in different directions can be provided. The idea according to one preferred embodiment is therefore that the lower end regions which are each in a vertical direction of the separator elements, which are arranged inclined in different directions, open into the collection basin at a common valley point. A V-shaped arrangement of the separator elements which opens downward is also conceivable. It can be provided that each of the bottom end regions of the separator elements in a vertical direction open into different collection basins. It is conceivable in this context in particular to arrange the collection basin laterally in the vicinity of lateral wall regions of the separation device. Last but not least, it is also conceivable for the separator elements of a separator layer of the at least one separator stage according to the invention and/or another separator stage to run in a common plane inclined relative to the horizontal direction, and to therefore be arranged inclined from one side wall to the opposite side wall. The bottom end regions can open into a collection basin arranged laterally near the side wall.

With regard to the embodiment of the separator elements of the at least one separator stage according to the invention, they are preferably designed tubular, wherein a corresponding rod-shaped design (with a full cross-section) is also possible. The external shape of the separator elements is not restricted to a circular cross-section. The external shape should, however, promote the cleaning effect achieved by the downward-flowing water, wherein in particular to avoid dripping edges, there should be a flow around the entire circumference of the separator elements. Preferably, the separator elements are therefore designed circular or oval in cross-section. Rectangular or respectively square cross-sectional shapes are also possible.

According to a particular advantageous embodiment of the invention, it can be provided that at least some of the inclined arranged separator elements of the at least one separator stage have a drainage channel which opens into the collection basin, in particular in the form of a drainage channel closed at the bottom in the vertical direction. For this purpose, some separator elements can be shell-shaped in cross-section, in particular semicircular. By means of such drainage channels, droplets raining from above the separator elements that are for example separated from the gas flow at a separator stage arranged above, a film of liquid flowing down onto the separator elements or a rinsing liquid directed from above onto the separator elements can be collected and conducted into the collection basin. The liquid guided into the drainage channels, in particular the large amount of accumulating liquid in a rinsing process, can thereby drain into the collection basin according to the invention protected from the gas flow flowing from below against the separator elements by following gravity. This can prevent droplets from being detached by the gas flow from the liquid flowing off the separator elements and transported back up towards the outlet of the separation device before the liquid enters the collection basin according to the invention.

The design of drainage channels in the separator elements has the disadvantage that the outside of the separator elements is not subject to a strong rinsing effect or respectively cleaning effect when liquid from above contacts the separator elements since the liquid is collected in the drainage channel and removed. This disadvantage can be compensated if the rinsing device is designed such that rinsing liquid is applied to at least some separator elements, in particular some of the separator elements equipped with a drainage channel, during a cleaning step from bottom to top, i.e. in the direction of gas flow.

A drainage channel can also be formed within the separator elements. The idea is that the separator elements are designed in the form of closed tubes, wherein these tubular separator elements which each have at least one inlet opening and at least one outlet opening for liquid hitting the separator elements from above. In so doing, at least part of the liquid hitting the separator elements from above can enter the interior of the separator elements and be removed there.

According to one advantageous embodiment, can be provided that the valve is designed as a float valve with a valve seat arranged on the bottom of the collection basin, and with a float body that at least partially closes the valve seat in the closed position of the valve. In particular, it can be provided that the float body is designed as an in particular spherical rollable body. Any basically rollable shape of the float body is conceivable in this embodiment. Preferably, the float body is designed as a float ball.

The idea of this embodiment is that, in the collection basin of the separation device according to the invention, a float body is introduced as a valve body of the valve, by means of which the outlet opening is released or at least partially closed in the open position or respectively in the closed position of the valve, depending on the fill level in the collection basin. If the bottom of the collection basin is sloped on all sides with the outlet opening arranged in the common valley point, the rollable float body can always roll toward the outlet opening upon contacting the bottom of the collection basin. The dimensions and buoyancy of the outlet opening and the rollable float body can be designed such that the float body only partially closes the outlet opening when small quantities of liquid accumulate in the collection basin. This can significantly prevent the penetration of the gas flow through the outlet opening.

When larger quantities of liquid accumulate, for example during the cleaning rinse of the separator elements, the float ball is lifted by the forming liquid level and thereby releases the complete outlet opening. When the spray is shut off, the liquid level drops and the ball rolls on the sloped bottom region of the collection basin back toward the outlet opening to at least partially close it in a closed position.

According to a preferred embodiment, it is provided that the bottom of the collection basin is shaped such that at least a part of a liquid collecting in the collection basin moves in the direction of the outlet opening controlled by the valve following gravity when the valve is in the open position, and in particular also when the valve is in the closed position. **In** particular, it is provided that the liquid moving toward the outlet opening flows downward out of the collection basin through the outlet opening both in the open position and in the closed position, wherein in this particular embodiment, the outlet opening is only partially closed in the closed position so that the drainage rate is reduced compared to the open position.

In one embodiment, the idea that is that the valve is designed as a valve which can be actuated in a controlled manner and which can be brought into the open position and or into the closed position by means of a controllable drive. In this variant of a valve that can be actuated in a controlled manner, i.e. in particular independent of the liquid level in the collection basin, it can for example be provided that the valve can be brought into the open and/or closed position hydraulically or pneumatically by means of a cylinder drive or by means of a drivable linkage or another suitable valve drive.

In a preferred variant of the valve that can be controlled or respectively manually actuated in a controlled manner, it can be provided that the cylinder drive is designed as a hydraulic drive, and wherein preferably the rinsing liquid provided to rinse or respectively spray separator elements can be used as the hydraulic fluid or the cylinder drive.

Supplying the valve drive with the rinsing liquid as a force transmission medium makes it possible to very easily integrate the valve in the separation device according to the invention. A supply line for rinsing liquid is normally easily achievable in generic devices. In this embodiment, no other media lines have to be provided apart from a supply line for rinsing liquid. When the cylinder drive is suitably coupled to a supply line for the rinsing liquid used for a cleaning rinse, it is conceivable for the valve to be brought into the open position when pressure is applied to the supply line in order to initiate a cleaning rinsing process of the separation device. The cleaning rinsing of the separation device would simultaneously bring the valve into its open position to thereby reduce the outlet opening of the collection basin for an increased liquid throughput. Furthermore, it can be provided that the valve is forced into the closed position by a restoring force. After the end of the cleaning rinse, i.e. when the pressure escapes from the supply line for the rinsing liquid, the valve is forced back into its closed position by the restoring force, whereby the outlet opening is again at least partially closed. The restoring force can for example be generated by a weight, by a spring element, or by another elastic element, or by a compressible medium.

According to the invention, the structure of the separation device according to the invention is such that the collection basin has an opening in its bottom region, by means of which a liquid collecting in the collection basin can be continuously discharged downwards out of the collection basin against the gas flow, independent of the open position and closed position of the valve.

In an advantageous embodiment, the idea is that the opening is formed by the outlet opening of the valve. Alternatively, the opening can also be arranged remotely from the outlet opening controlled by the valve at another location in the basin bottom.

To prevent accumulating contaminants within the collection basin, it can be provided that the rinsing apparatus is designed and configured such that the collection basin can be rinsed on the inside. For example, the rinsing of the collection basin can be performed by means of a rinsing nozzle arranged directly above the rinsing basin. The rinsing nozzle can be designed and configured such that an in particular conically shaped rinsing jet with rinsing liquid can be discharged into the collection basin, with which contaminants on the inner walls and/or in the region of the outlet opening of the collection basin can be loosened and rinsed off.

In particular, the outlet opening in the collection basin is a bottleneck that, for example, can be blocked in a use in a flue gas desulfurization systems by falling gypsum deposits. It can therefore be provided to clean the collection basin during a rinsing process, in particular by means of a nozzle that emits a spray cone of a spray jet into the interior of the collection basin.

Flat jet nozzles are particularly suitable for this purpose since they generate a particularly high pulse to dissolve any deposits.

According to an advantageous embodiment, it can be provided that at least one additional separator stage is arranged above the at least one separator stage in a vertical direction. This last stage in the direction of flow can be used to separate very small droplets and particles from the gas flow. This last stage can therefore be designed as a droplet separator with separator elements designed as lamellar separators. As already mentioned, the separation device according to the invention preferably has at least a first and a second separator stage, wherein it is understood that three or more than three separator stages can also be arranged in the separation device.

It can furthermore be provided that at least one additional separator stage is arranged below the at least one separator stage in a vertical direction. The first stage viewed in the direction of flow can be used for the basic cleaning of the gas flow introduced into the separation device.

Finally, a flue gas purification system is in accordance with the invention that has at least one separation device according to one of the embodiments described above. Advantages and possible embodiments of the flue gas cleaning system according to the invention are found in particular in the explanations of the separation device according to the invention.

The invention is explained in detail in the following based on exemplary embodiments in connection with the drawings. Shown in the drawings is:
- Fig. 1: a schematic side view of a separation device according to the invention;
- Fig. 2a: a schematic side view of a collection basin as in Fig. 1 with a valve of a first variant in a closed position,

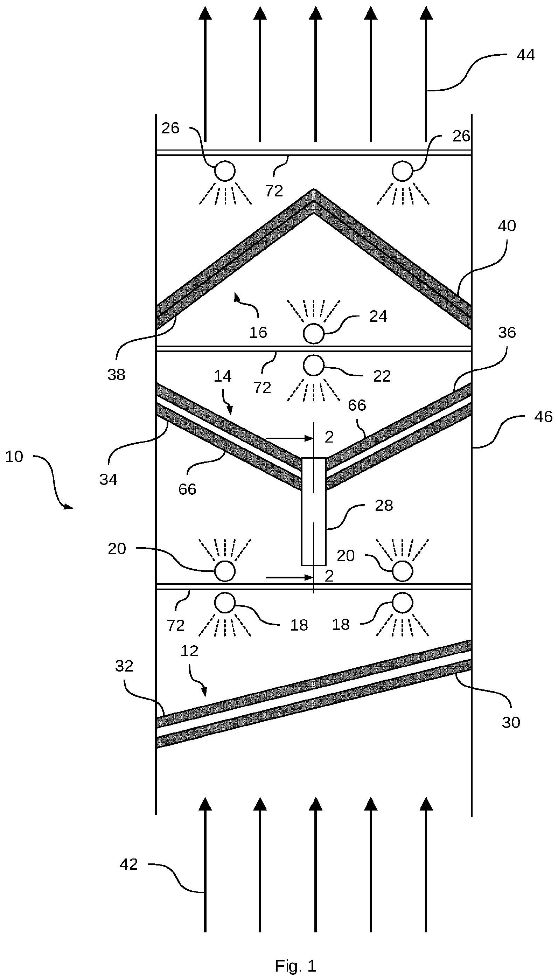

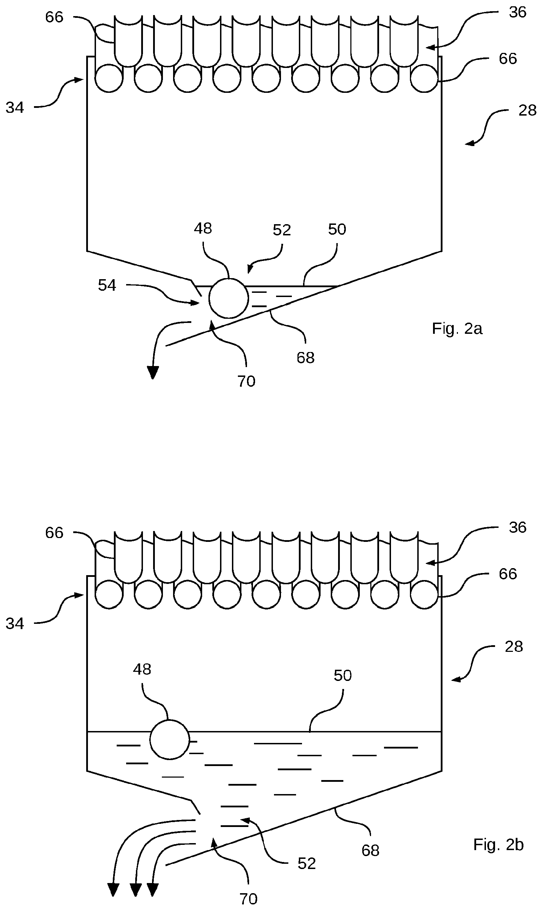

- Fig. 2a: a schematic side view of a collection basin as in Fig. 1 with a valve of the variant from Fig 2a in an open position,

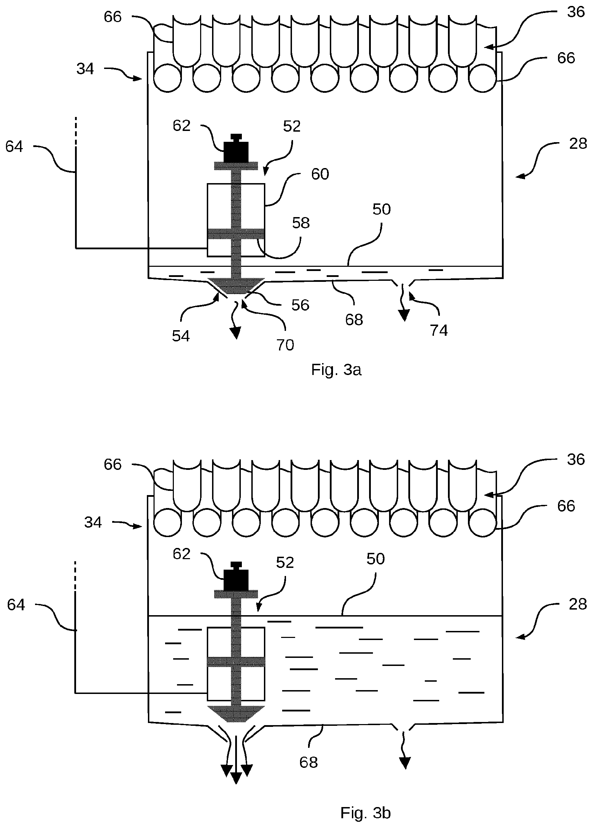

- Fig. 3a: a schematic side view of a collection basin as in Fig. 1 with a valve of a second variant in a closed position,
- Fig. 3b: a schematic side view of a collection basin as in Fig. 1 with a valve of the variant from Fig. 3a in an open position, and

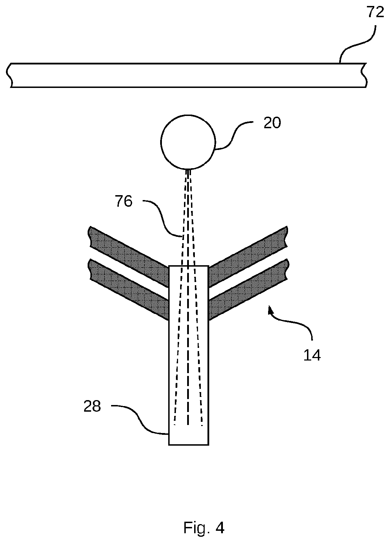

- Fig. 4: a schematic representation of the collection basin from Fig. 1 with a rinsing nozzle arranged above the collection basin.

Fig. 1 schematically shows a separation device 10 according to the invention with a gas flow 42 flowing from below in the vertical direction into the separation device which passes through the device and leaves the device as an outflowing gas flow 44 flowing upward out of the separation device 10. The separation device 10 of the shown variant is composed of a first (bottom) separator stage 12, a second (middle) separator stage 14 and a third (top) separator stage 16. In the shown variants, the separator stages 12, 14 and 16 each comprise two separator layers 30, 32; 34, 36 and 38, 40. At least the separator layers 34 and 36 of the middle separator stage 14 have individual elongated, in particular rod-shaped, separator elements 66 arranged parallel to each other as indicated in Fig. 2a to 3b.

The rod-shaped separator elements 66 of the middle separator stage 14 are arranged offset from one another (see Fig. 2a to 3b) so that they overlap in the direction of gas flow (from bottom to top), and a curved flow path is formed between them.

The separator layers 34 and 36 of the middle separator stage 14 each have separator elements 66 inclined in the direction of a somewhat centrally arranged collection basin 28. The separator elements 66 of the middle separator stage 14 are therefore arranged somewhat V-shaped. At a common valley point, which in the shown example is arranged approximately in the middle of the module housing 46 of the separation device 10, the separator elements 66 open into the collection basin 28. A rinsing liquid discharged from a nozzle 22 of the rinsing apparatus from above in the direction of the separator elements 66, or respectively by means of nozzles 20 from below in the direction of the separator elements 66, catches on the separator elements 66 and runs off them following gravity in the direction of the collecting basin 28, and is collected there.

Additional separator stages 12 and 16 can be provided to which rinsing liquid can also be applied using nozzles 18 or respectively 24 and 26. The rinsing nozzles 18, 20, 22, 24, 26 are each supplied with rinsing liquid by supply lines 72. In the shown example, the supply lines 72 run approximately transverse to the gas flow direction and laterally adjoin the housing 46 of the separation device 10. It can be provided that the nozzles 18, 20, 22, 24, 26 are integrated in the supply line 72 or are borne by them. The additional separator stage 16 is shown in the present case with two separator levels 38, 40. In a preferred embodiment, this additional separator stage is designed as a lamellar separator, in particular as a lamellar separator with only one individual separator level.

Independent of the shown exemplary embodiments, it can be provided that rods or respectively tubes are preferably used as elongated separator elements 66 which are arranged at certain distances from one another in order to produce a desired agglomeration effect. When two or more are used as two separator layers 34, 36, the separator element 66 of at least two separator layers 34, 36 should be arranged offset from each other in an operating position, i.e., they overlap in the gas flow direction so that the desired deflection effects of the gas flow 42, 44 are achieved. It can furthermore be provided that the distances of the separator layers 34, 36 to each other, and/or the orientation of the separator layers 34, 36 to each other in a vertical direction can be changed (degrees of overlap), in particular are adjustable without a tool and/or with an adjusting drive (not shown).

Fig. 2a and 2b schematically show the collection basin 28 from Fig. 1 in a lateral view in the direction of view 2-2 from Fig. 1. Fig. 2a shows a valve 52 according to the invention in a closed position with a valve body designed as a spherical float body 48 which is seated in a valve seat 54 in the region of an outlet opening 70 and which partially closes the outlet opening 70. The liquid accumulating in the collection basin 28, for example with the liquid droplets separated from the treated gas flow 42 and/or with a continuous spraying of the separator elements 66 of the separator levels 34, 36 of the middle separator stage 14, continuously drains out of the collection basin 28 in the closed position shown in Fig. 2a downwards against the gas stream 42 directed from bottom to top. The valve 52 with the float body 48 is designed such that a liquid level 50 can collect in the collection basin 28. The liquid level 50 covers the outlet opening 70 and thereby prevents the entrance of the gas flow 42 through the outlet opening 70 in the collection basin.

As schematically indicated in Fig. 2a, 2b and 3a, 3b, the separator elements 66 of the top separator layer 36 for example can be design trough-shaped, i.e., with a shell-shaped cross-section. This allows a liquid separated from above, for example at a separator stage 16 arranged above, or respectively discharged by means of the rinsing device onto the separator stage 14, to be efficiently captured and conducted into the collection basin 28 in the drainage channels formed by the trough shape. The shell shape of the separator elements 66 of the top separator layer 36 effectively protects the liquid film draining in the drainage channels formed there from the gas flow 42 coming from below so that fewer droplets are detached from the liquid running in the direction of the collection basin 28 and transported back in the direction of the outlet of the separation device 10. This effect can also be achieved with a tubular embodiment of the separator elements 66, wherein such tubular separator elements 66 have suitable inlet and outlet openings for receiving or respectively discharging the liquid.

Fig. 2b shows the valve 52 from Fig. 2a in an open position. From a liquid level 50 rising in the collection basin 28, the float body 48 experiences buoyancy. The valve body designed as a float body 48 is thereby lifted from its valve seat 54 and completely releases the outlet opening 70 of the collection basin 28. The greater quantity of liquid, for example from a cleaning rinse of the separator elements 66 of the separator layers 34, 36 in the collection basin 28 can then (as indicated) flow out of the collection basin 28 with a higher drainage speed due to the completely released outlet opening 70.

The bottom 68 of the collection basin 28 is such that the conical float body 48 rolls on the bottom 68 always in the direction of the valve seat 54 as the liquid level 50 drops. When the liquid level 50 is correspondingly low, the float body rolls into the valve seat 54, and the valve resumes the closed position.

The outlet opening 70, as indicated in Fig. 2a and 2b, can be protected at the bottom from a direct flow by the gas flow 42 flowing into the separation device 10. For this purpose, a projection may be formed in the bottom 68 of the collection basin 28 which extends in a vertical direction below the outlet opening 70, covering the outlet opening 70 at a distance, and accordingly prevents a direct flow to the outlet opening 70.

Fig. 3a and 3b show a collection basin 28 according to the invention with a valve 52 of an alternative variant. In this variant, the valve 52 is designed as a valve that can be actuated in a controlled manner, in particular independent from the liquid level 50 prevailing in the collection basin. A cylinder 60 drives a valve body 56. In the closed position shown in Fig. 3a, the valve body 56 lies in the valve seat 54 and thereby partially closes the outlet opening 70, so that - as in the embodiment from Fig. 2a - the liquid collecting in the collection basin 28 is prevented from draining completely but can still flow off steadily. The valve 52 is designed such that when the separator elements 66 of the separator layers 34 and 36 are continuously sprayed, a liquid level 50 forms within the collection basin 28 and thereby prevents an entrance through the outlet opening 70 of the gas flow 42 flowing from below against the collection basin 28.

Fig. 3b shows the valve 52 from Fig. 3a in an open position. In the shown example, the valve 52 is forced into the closed position by means of a restoring force acting in the valve cylinder 60 on the piston 58 guiding the valve body 56 on a piston rod. For this purpose, the piston 58 is weighted from above with a weight 62 which forces the piston 58 and thereby the valve body 56 downward into the valve seat 54 following gravity. The weight 62, or respectively the outer shell of the weight 62, should consist of a corrosion-resistant material, especially when used in a flue gas cleaning system, in order to manifest good resistance to the aggressive environmental influences prevailing there. Instead of a weight 62, it can also be provided to arrange a spring or another elastic element within the cylinder 60, and/or the cylinder could be pressurized with a compressible medium such that a restoring force is generated that forces the valve 52 into the closed position.

By means of a control line 64, a hydraulic fluid can be let into the chamber of the cylinder 60 facing away from the chamber applying the restoring force so that a counterforce moves the piston 58 against the restoring force. This lifts the valve body 56 guided by the piston 58 out of the valve seat 54, and the outlet opening 70 is released when the valve 52 is in the open position. The control line 64 can be connected to a supply line 72 conducting the rinsing fluid for a cleaning rinse so that the valve 52 can be simultaneously brought into the open position when the supply line 72 is pressurized and a cleaning rinse starting therewith begins.

For continuous drainage from the collection basin 28, the liquid in the shown example is drained downward from the collection basin 28 through the outlet opening 70 controlled by the valve 52. To this end, the outlet opening 70 is only partially and not completely closed when the valve 52 is in the closed position. As shown in the example in Fig. 3a and 3b, for continuous drainage another opening 74 is arranged in the bottom 68 of the collection basin 28 through which drainage of at least a part of the liquid out of the collection basin 28 is made possible independent of the open and closed position of the valve 52. The opening 74 can be dimensioned so that a liquid level forms above the opening 74, and the opening 74 is therefore permanently covered to prevent entrance of the gas flow 42 flowing from below against the collection basin 28.

Fig. 4 shows the collection basin 28 from Fig. 1 with a nozzle 20 arranged above the collection basin 28. The nozzle 20 is designed such that a spray cone 76 leaving the nozzle is directed from above directly into the collection basin 28 open at the top. The spray cone 76 serves for directional clearing of accumulations of dirt deposits or other deposits of material that collect on the inner walls and/or in the region of the valve 52 arranged at the bottom 68 of the collection basin 28. The nozzle 20 is preferably activated during a cleaning rinse of the separator elements 66 of the separator stage 14. It can alternatively or additionally be provided that the nozzle 20 is activatable independent of the cleaning rinse. For the nozzle 20, flat jet nozzles are particularly suitable since they generate a particularly high pulse to dissolve any deposits.

### LIST OF REFERENCE SIGNS

| | | | |
|---|---|---|---|
| 10 | Separation device | 50 | Liquid level |
| 12 | First separator stage | 52 | Valve |
| 14 | Second separator stage | 54 | Valve seat |
| 16 | Third separator stage | 56 | Valve body |
| 18 | Nozzles of the rinsing apparatus | 58 | Piston |
| 20 | Nozzles of the rinsing apparatus | 60 | Cylinder |
| 22 | Nozzles of the rinsing apparatus | 62 | Weight |
| 24 | Nozzles of the rinsing apparatus | 64 | Control line |
| 26 | Nozzles of the rinsing apparatus | 66 | Separator elements |
| 28 | Collection basin | 68 | Bottom of the collection basin |
| 30 | First separator layer of the first separator stage | 70 | Outlet opening |
| 32 | Second separator layer of the first separator stage | 72 | Supply line |
| 34 | First separator layer of the second separator stage | 74 | Opening |
| 36 | Second separator layer of the second separator stage | 76 | Spray cone |
| 38 | First separator layer of the third separator stage | | |
| 40 | Second separator layer of the third separator stage | | |
| 42 | Inflowing gas flow | | |
| 44 | Outflowing gas flow | | |
| 46 | Housing | | |
| 48 | Float body | | |

## Claims

1. A separation device (10) for separating drops and particles from a gas stream (42) having a directional component facing upward in a substantially vertical direction, wherein the separation device (10) contains at least one separator stage (14) that comprises at least one separator layer (34) having a plurality of elongated separator elements (66) arranged parallel to each other, and wherein the separator elements (66) of the at least one separator stage (14) are arranged inclined in their longitudinal orientation relative to the horizontal direction in a first region in at least one direction of inclination, and wherein the separation device (10) has a rinsing apparatus by means of which a rinsing liquid can be applied to at least some of the inclined arranged separator elements (66), **characterized in that** the bottom end regions in a vertical direction of the separator elements (66) of at least one separator stage (14) open into a collection basin (28) arranged in the gas stream (42), and wherein the collection basin (28) has a valve (52) in a bottom region (68) which controls an outlet opening (70) and can be brought into an open position releasing the outlet opening (70) and into a closed position at least partially closing the outlet opening (70), and wherein the collection basin (28) has an opening (74) in its bottom region (68) by means of which a liquid collecting in the collection basin can be continuously drained downward out of the collection basin (28) opposite the gas stream (42) independent of the open position and the closed position of the valve (52).

2. The separation device (10) according to claim 1, **characterized in that** the separator elements (66) are arranged inclined in a second region in another direction of inclination, in particular such that the separator elements (66) of the at least one separator stage (14) are arranged approximately in a V-shape.

3. The separation device (10) according to claim 2, **characterized in that** the lower end regions in a vertical direction of the separator elements (66), which are arranged inclined in different directions, open into the collection basin (28) at a common valley point.

4. The separation device (10) according to one of the preceding claims, **characterized in that** at least some of the inclined arranged separator elements (66) of the at least one separator stage (14) have a drainage channel opening into the collection basin.

5. The separation device (10) according to one of the preceding claims, **characterized in that** the valve (52) is designed as a float valve with a valve seat (54) arranged on the bottom of the collection basin (28), and with a float body (48) that at least partially closes the valve seat (54) in the closed position of the valve (52).

6. The separation device (10) according to claim 5, **characterized in that** the float body (48) is designed as an in particular spherical rollable body.

7. The separation device (10) according to one of the preceding claims, **characterized in that** the bottom (68) of the collection basin is shaped such that at least a part of a liquid collecting in the collection basin (28) moves in the direction of the outlet opening (70) controlled by the valve (52) following gravity when the valve (52) is in the open position, and in particular also when the valve (54) is in the closed position.

8. The separation device (10) according to one of the preceding claims, **characterized in that** the valve (52) is designed as a valve (52) which can be actuated in a controlled manner and which can be brought into the open position and or into the closed position by means of a controllable drive (58, 60).

9. The separation device (10) according to claim 8, **characterized in that** the valve (52) can be brought into the open and/or the closed position by means of a cylinder drive (58, 60).

10. The separation device (10) according to claim 9, **characterized in that** the cylinder drive (58, 60) is designed as a hydraulic drive, and wherein preferably, the rinsing liquid provided to rinse separator elements (66) is used as the hydraulic fluid for the cylinder drive.

11. The separation device (10) according to one of the preceding claims, **characterized in that** the opening (74) is formed by means of the outlet opening (70) of the valve (52).

12. The separation device according to one of the preceding claims, **characterized in that** the rinsing device is designed and configured such that the inside of the collection basin (28) can be rinsed.

13. The separation device according to one of the preceding claims, **characterized in that** at least one additional separator stage (16) is arranged above the at least one separator stage (14) in a vertical direction.

14. The separation device according to one of the preceding claims, **characterized in that** at least one additional separator stage (12) is arranged below the at least one separator stage (14) in a vertical direction.

15. A flue gas cleaning system having at least one separation device (10) according to one of the preceding claims.

## Patentansprüche

1. Abscheidevorrichtung (10) zum Abscheiden von Tropfen und Partikeln aus einem Gasstrom (42) mit einer im Wesentlichen in vertikaler Richtung nach oben weisenden Richtungskomponente, wobei die Abscheidevorrichtung (10) mindestens eine Abscheiderstufe (14) enthält, die mindestens eine Abscheiderlage (34) mit mehreren längsausgedehnten parallel zueinander angeordneten Abscheiderelementen (66) umfasst, und wobei die Abscheiderelemente (66) der mindestens einen Abscheiderstufe (14) in ihrer Längsausrichtung gegenüber der waagerechten Richtung in einem ersten Bereich in mindestens eine erste Neigungsrichtung geneigt angeordnet sind, und wobei die Abscheidevorrichtung (10) eine Spüleinrichtung aufweist, mittels der mindestens einige der geneigt angeordneten Abscheiderelemente (66) mit einer Spülflüssigkeit beaufschlagbar sind, **dadurch gekennzeichnet, dass** die in lotrechter Richtung unteren Endbereiche der Abscheiderelemente (66) mindestens einer Abscheiderstufe (14) in ein im Gasstrom (42) angeordnetes Auffangbecken (28) münden, und wobei das Auffangbecken (28) in einem Bodenbereich (68) ein eine Auslassöffnung (70) beherrschendes Ventil (52) aufweist, das in eine die Auslassöffnung (70) freigebende Offenstellung und in eine die Auslassöffnung (70) zumindest teilweise geschlossene Schließstellung bringbar ist, und wobei das Auffangbecken (28) in seinem Bodenbereich (68) eine Öffnung (74) aufweist, mittels der unabhängig von der Offenstellung und Schließstellung des Ventils (52) eine sich in dem Auffangbecken sammelnde Flüssigkeit stetig nach unten aus dem Auffangbecken (28) entgegen dem Gasstrom (42) abgeleitet werden kann.

2. Abscheidevorrichtung (10) nach Anspruch 1, **dadurch gekennzeichnet, dass** die Abscheiderelemente (66) in einem zweiten Bereich in eine weitere Neigungsrichtung geneigt angeordnet sind, insbesondere derart, dass die Abscheiderelemente (66) der mindestens einen Abscheiderstufe (14) etwa V-förmig angeordnet sind.

3. Abscheidevorrichtung (10) nach Anspruch 2, **dadurch gekennzeichnet, dass** die in vertikaler Richtung unteren Endbereiche der Abscheiderelemente (66), die in verschieden Richtungen geneigt angeordnet sind, an einem gemeinsamen Talpunkt in das Auffangbecken (28) münden.

4. Abscheidevorrichtung (10) nach einem der vorangegangenen Ansprüche, **dadurch gekennzeichnet, dass** mindestens einige der geneigt angeordneten Abscheiderelemente (66) der mindestens einen Abscheiderstufe (14) einen in das Auffangbecken mündenden Ablaufkanal aufweisen.

5. Abscheidevorrichtung (10) nach einem der vorangegangenen Ansprüche, **dadurch gekennzeichnet, dass** das Ventil (52) als Schwimmerventil ausgebildet ist, mit einem am Boden des Auffangbeckens (28) angeordneten Ventilsitz (54) und mit einem Schwimmkörper (48), der den Ventilsitz (54) in der Schließstellung des Ventils (52) zumindest bereichsweise verschließt.

6. Abscheidevorrichtung (10) nach Anspruch 5, **dadurch gekennzeichnet, dass** der Schwimmkörper (48) als ein, insbesondere kugelförmiger, rollfähiger Körper ausgebildet ist.

7. Abscheidevorrichtung (10) nach einem der vorangegangenen Ansprüche, **dadurch gekennzeichnet, dass** der Boden (68) des Auffangbeckens derart geformt ist, dass sich zumindest ein Teil einer sich in dem Auffangbecken (28) sammelnden Flüssigkeit der Schwerkraft folgend in Richtung der von dem Ventil (52) beherrschten Auslassöffnung (70) bewegt, wenn das Ventil (52) in der Offenstellung ist, und insbesondere wenn das Ventil (52) in der Schließstellung ist.

8. Abscheidevorrichtung (10) nach einem der vorangegangenen Ansprüche, **dadurch gekennzeichnet, dass** das Ventil (52) als gesteuert betätigbares Ventil (52) ausgebildet ist, das mittels eines steuerbaren Antriebs (58, 60) in die Offenstellung und/oder in die Schließstellung bringbar ist.

9. Abscheidevorrichtung (10) nach Anspruch 8, **dadurch gekennzeichnet, dass** das Ventil (52) mittels eines Zylinderantriebs (58, 60) in die Offen- und/oder in die Schließstellung bringbar ist.

10. Abscheidevorrichtung (10) nach Anspruch 9, **dadurch gekennzeichnet, dass** der Zylinderantrieb (58, 60) als hydraulischer Antrieb ausgestaltet ist und wobei vorzugsweise die für eine Spülung von Abscheiderelementen (66) vorgesehene Spülflüssigkeit als die Hydraulikflüssigkeit des Zylinderantriebs verwendet wird.

11. Abscheidevorrichtung (10) nach einem der vorangegangenen Ansprüche, **dadurch gekennzeichnet, dass** die Öffnung (74) mittels der Auslassöffnung (70) des Ventils (52) ausgebildet ist.

12. Abscheidevorrichtung nach einem der vorangegangenen Ansprüche, **dadurch gekennzeichnet, dass** die Spüleinrichtung derart ausgestaltet und eingerichtet ist, dass die innenseite des Auffangbeckens (28) gespült werden kann.

13. Abscheidevorrichtung nach einem der vorangegangenen Ansprüche, **dadurch gekennzeichnet, dass** in vertikaler Richtung oberhalb der mindestens einen Abscheiderstufe (14) mindestens eine weitere Abscheiderstufe (16) angeordnet ist.

14. Abscheidevorrichtung nach einem der vorangegangenen Ansprüche, **dadurch gekennzeichnet, dass** in vertikaler Richtung unterhalb der mindestens einen Abscheiderstufe (14) mindestens eine weitere Abscheiderstufe (12) angeordnet ist.

15. Rauchgasreinigungssystem mit mindestens einer Abscheidevorrichtung (10) nach einem der vorangegangenen Ansprüche.

## Revendications

1. Dispositif de séparation (10) pour séparer des gouttes et des particules d'un flux de gaz (42) ayant une composante directionnelle orientée vers le haut dans une direction sensiblement verticale, dans lequel le dispositif de séparation (10) contient au moins un étage de séparation (14) qui comprend au moins une couche de séparation (34) ayant une pluralité d'éléments de séparation allongés (66) agencés parallèlement les uns aux autres, et dans lequel les éléments de séparation (66) de l'au moins un étage de séparation (14) sont agencés inclinés dans leur orientation longitudinale par rapport à la direction horizontale dans une première région dans au moins une direction d'inclinaison, et dans lequel le dispositif de séparation (10) a un appareil de rinçage au moyen duquel un liquide de rinçage peut être appliqué à au moins une partie des éléments de séparation agencés inclinés (66), **caractérisé en ce que** les régions d'extrémité inférieures dans une direction verticale des éléments de séparation (66) d'au moins un étage de séparation (14) débouchent dans un bassin collecteur (28) agencé dans le flux de gaz (42), et dans lequel le bassin collecteur (28) a une vanne (52) dans une région inférieure (68) qui commande une ouverture de sortie (70) et peut être amenée dans une position ouverte libérant l'ouverture de sortie (70) et dans une position fermée fermant au moins partiellement l'ouverture de sortie (70), et dans lequel le bassin collecteur (28) a une ouverture (74) dans sa région inférieure (68) au moyen de laquelle un liquide s'accumulant dans le bassin collecteur peut être évacué en continu vers le bas hors du bassin collecteur (28) à l'opposé du flux de gaz (42) indépendamment de la position ouverte et de la position fermée de la vanne (52).

2. Le dispositif de séparation (10) selon la revendication 1, **caractérisé en ce que** les éléments de séparation (66) sont agencés inclinés dans une seconde région dans une autre direction d'inclinaison, en particulier de telle sorte que les éléments de séparation (66) de l'au moins un étage de séparation (14) sont agencés approximativement en forme de V.

3. Le dispositif de séparation (10) selon la revendication 2, **caractérisé en ce que** les régions d'extrémité inférieures dans une direction verticale des éléments de séparation (66), qui sont agencés inclinés dans différentes directions, débouchent dans le bassin collecteur (28) à un point bas commun.

4. Le dispositif de séparation (10) selon l'une des revendications précédentes, **caractérisé en ce que** au moins une partie des éléments de séparation agencés inclinés (66) de l'au moins un étage de séparation (14) ont un canal de drainage débouchant dans le bassin collecteur.

5. Le dispositif de séparation (10) selon l'une des revendications précédentes, **caractérisé en ce que** la vanne (52) est conçue comme une vanne à flotteur avec un siège de vanne (54) agencé sur le fond du bassin collecteur (28), et avec un corps de flotteur (48) qui ferme au moins partiellement le siège de vanne (54) dans la position fermée de la vanne (52).

6. Le dispositif de séparation (10) selon la revendication 5, **caractérisé en ce que** le corps de flotteur (48) est conçu comme un corps roulant en particulier sphérique.

7. Le dispositif de séparation (10) selon l'une des revendications précédentes, **caractérisé en ce que** le fond (68) du bassin collecteur est formé de telle sorte qu'au moins une partie d'un liquide s'accumulant dans le bassin collecteur (28) se déplace dans la direction de l'ouverture de sortie (70) commandée par la vanne (52) en suivant la gravité lorsque la vanne (52) est dans la position ouverte, et en particulier aussi lorsque la vanne (54) est dans la position fermée.

8. Le dispositif de séparation (10) selon l'une des revendications précédentes, **caractérisé en ce que** la vanne (52) est conçue comme une vanne (52) qui peut être actionnée de manière commandée et qui peut être amenée dans la position ouverte et/ou dans la position fermée au moyen d'un entraînement commandable (58, 60).

9. Le dispositif de séparation (10) selon la revendication 8, **caractérisé en ce que** la vanne (52) peut être amenée dans la position ouverte et/ou la position fermée au moyen d'un entraînement à cylindre (58, 60).

10. Le dispositif de séparation (10) selon la revendication 9, **caractérisé en ce que** l'entraînement à cylindre (58, 60) est conçu comme un entraînement hydraulique, et dans lequel de préférence, le liquide de rinçage fourni pour rincer les éléments de séparation (66) est utilisé comme le fluide hydraulique pour l'entraînement à cylindre.

11. Le dispositif de séparation (10) selon l'une des revendications précédentes, **caractérisé en ce que** l'ouverture (74) est formée au moyen de l'ouverture de sortie (70) de la vanne (52).

12. Le dispositif de séparation (10) selon l'une des revendications précédentes, **caractérisé en ce que** le dispositif de rinçage est conçu et configuré de telle sorte que l'intérieur du bassin collecteur (28) peut être rincé.

13. Le dispositif de séparation (10) selon l'une des revendications précédentes, **caractérisé en ce que** au moins un étage de séparation additionnel (16) est agencé au-dessus de l'au moins un étage de séparation (14) dans une direction verticale.

14. Le dispositif de séparation (10) selon l'une des revendications précédentes, **caractérisé en ce que** au moins un étage de séparation additionnel (12) est agencé au-dessous de l'au moins un étage de séparation (14) dans une direction verticale.

15. Système d'épuration de gaz de combustion ayant au moins un dispositif de séparation (10) selon l'une des revendications précédentes.
